# EUROPEAN PATENT APPLICATION

(11) **EP 2 468 440 A1**
(43) Date of publication of application: **27.06.2012**
(21) Application number: 11164173.4
(22) Date of filing: 28.04.2011
(51) Int. Cl.: B23D 21/06, B23B 5/16

(54) **A pipe cutter with chamfering device**

(30) Priority: 24.12.2010 CN 201020681320 U
(71) Applicant: Shanghai Easy-Use Tools Enterprise Co. Ltd., Shanghai 201100 (CN)
(72) Inventor: Sun, Shiyu, 201108, SHANGHAI (CN)
(74) Representative: Larcher, Dominique

(57) **Abstract**

A pipe cutter with chamfering device including a pipe cutting portion (10) and a feed portion (20), the internal feed portion (20) includes a chamfering device, a main body of the chamfering device is a handheld grip (21) of the feed portion (20); the chamfering device has chamfering knives (22) with an annular arrangement, edges of the chamfering knives (22) form a taper angle; the chamfering device is demountable. The pipe cutter with chamfering device according to the present invention can be used to cut pipe, chamfering internal wall of the pipe.

## Description

### TECHNICAL FIELD

The present invention relates to a manual hardware tool, and particularly to a pipe cutter with chamfering device.

### BACKGROUND

A pipe cutter may be utilized for cutting pipe materials to meet a desired length. However, edge and corner of internal wall of a pipe cut off by a pipe cutter may be very sharp. It may be appreciated to provide another type of tool to blunt down the acute angle of the pipe. Although a separate pipe cutter and pipe chamfering device are available in market, it needs more types of tools and also increases weight of a toolkit.

### SUMMARY

The present invention is directed to a pipe cutter with chamfering device, including a pipe cutting portion, and a feed portion where a chamfering device is provided, a main body of the chamfering device is a handheld grip of the feed portion. Chamfering knives with an annular arrangement are located in the chamfering device, and edges of the chamfering knives form a taper angle. A plurality of clearance holes are spaced with the chamfering knives and annularly distributed at a bottom of the chamfering device. The chamfering device is demountable.

Comparing with the existing technology, the pipe cutter with chamfering device according to the present invention can be used to cut pipe, chamfering internal wall of the pipe.

It is to be understood that both the foregoing general description and the following detailed description are exemplary only and are not necessarily restrictive of the disclosure as claimed. The accompanying drawings, which are incorporated in and constitute a part of the specification, illustrate an embodiment of the disclosure and together with the general description, serve to explain the principle of the disclosure.

### BRIEF DESCRIPTION OF THE DRAWINGS

The numerous advantages of the present invention may be better understood by those skilled in the art by reference to the accompanying figures in which:
FIG. 1 is a structure diagram of a pipe cutter with chamfering device of the present invention; and
FIG. 2 is a left view of the pipe cutter with chamfering device as shown in Fig. 1.

### DETAILED DESCRIPTION

Reference will now be made in detail to the subject matter disclosed, which is illustrated in the accompanying drawings.

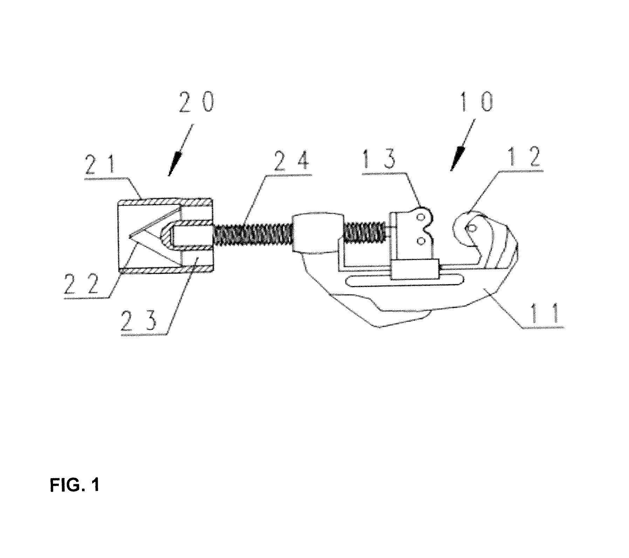

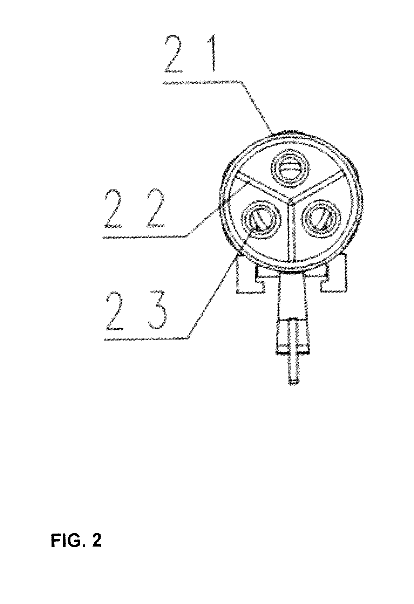

Referring to Fig. 1 and Fig. 2, a pipe cutter with chamfering device including a pipe cutting portion 10 and a feed portion 20 is shown. The pipe cutting portion 10 may comprise a cutter frame 11, a cutter 12 and a roller 13. The feed portion 20 may comprise a handheld grip 21 and a screw rod 24.

The operation of the pipe cutter with chamfering device includes the following steps: firstly, locate the pipe materials between the cutter 12 and the roller 13; secondly, turn the handheld grip 21, drive the screw rod 24 and propel the roller 13 for making the cutter 12 pitched into the wall of the pipe; and then rotate the pipe cutter around the axis of the material pipe, let cutter 12 cut annularly a circumference of the pipe; propelling the roller 13 and rotating the cutter 12 continually will cut through the pipe.

The feed portion 20 further comprises a chamfering device. The chamfering device includes a main body, chamfering knives 22 and a clearance hole 23. The main body of the chamfering device is the handheld grid 21 of the feed portion 20.

The chamfering device includes chamfering knives 22, chamfering knives 22 are arranged annularly. Edges of chamfering knives 22 form a taper angle.

When operated, a pipe may be inserted into the main body of the chamfering device, causing the taper angle of the chamfering tool 22 to be put into the inner bore of the pipe. The edges of the chamfering knives 22 may then engage the sharp edges of the internal wall of the pipe, and by turning the pipe or the chamfering device main body with respect to each other, the sharp edges of the internal wall of the pipe may be smoothed.

A plurality of clearance holes 23 are located at a bottom of the chamfering device, the clearance holes 23 and the chamfering knives 22 are spaced from each other and annularly distributed, this configuration is convenient to eliminate the scraps generated in the chamfer operation from the bottom.

It is believed that the pipe cutter with chamfering device of the present invention and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

## Claims

1. A pipe cutter with chamfering device, including:
a pipe cutting portion (10), and
a feed portion (20), where a chamfering device is provided, a main body of the chamfering device is a handheld grip (21) of the feed portion (20).

2. The pipe cutter with chamfering device as set forth in claim 1, wherein chamfering knives (22) with an annular arrangement are located in the chamfering device, and edges of the chamfering knives (22) form a taper angle.

3. The pipe cutter with chamfering device as set forth in claim 1, wherein a plurality of annularly distributed clearance holes (23) are provided at a bottom of the chamfering device.

4. The pipe cutter with chamfering device as set forth in claim 1, wherein the chamfering device is demountable.
